(19) Europäisches Patentamt
European Patent Office
Office européen des brevets

(11) **EP 3 314 341 B1**

(12) **EUROPÄISCHE PATENTSCHRIFT**

(45) Veröffentlichungstag und Bekanntmachung des Hinweises auf die Patenterteilung:
**25.01.2023   Patentblatt 2023/04**

(21) Anmeldenummer: **16726056.1**

(22) Anmeldetag: **23.05.2016**

(51) Internationale Patentklassifikation (IPC):
**G05B 19/418** $^{(2006.01)}$

(52) Gemeinsame Patentklassifikation (CPC):
**G05B 19/418; G05B 19/41865;** G05B 2219/25289;
G05B 2219/25387; G05B 2219/39407; Y02P 80/10;
Y02P 90/02

(86) Internationale Anmeldenummer:
**PCT/EP2016/061530**

(87) Internationale Veröffentlichungsnummer:
**WO 2016/206886 (29.12.2016 Gazette 2016/52)**

(54) **VERFAHREN UND VORRICHTUNG ZUR ERMITTLUNG EINES ENERGIEEFFIZIENTEN ARBEITSPUNKTS**

METHOD AND DEVICE FOR DETERMINING AN ENERGY-EFFICIENT OPERATING POINT

PROCÉDÉ ET DISPOSITIF PERMETTANT DE DÉTERMINER UN POINT DE FONCTIONNEMENT EFFICACE SUR LE PLAN ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2015   DE 102015211944**

(43) Veröffentlichungstag der Anmeldung:
**02.05.2018   Patentblatt 2018/18**

(73) Patentinhaber: **ZF Friedrichshafen AG**
**88046 Friedrichshafen (DE)**

(72) Erfinder:
• **XU, Yiwen**
**94113 Tiefenbach (DE)**

• **YAKARIA, Herman**
**88085 Langenargen (DE)**
• **KÖSLER, Tobias**
**88045 Friedrichshafen (DE)**
• **ACKERMANN, Thomas**
**88045 Friedrichshafen (DE)**
• **BAUER, Johannes**
**97241 Bergtheim (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
EP-A1- 1 890 212          EP-A1- 2 650 739
WO-A1-2013/143585    WO-A2-02/29501

**Beschreibung**

Die vorliegende Erfindung betrifft ein Verfahren zur Ermittlung eines energieeffizienten Arbeitspunkts gemäß dem Oberbegriff von Anspruch 1, eine Vorrichtung zur Ermittlung eines energieeffizienten Arbeitspunkts gemäß dem Oberbegriff von Anspruch 7 sowie ein Werkzeugmaschinensystem.

Im Stand der Technik ist es bekannt, Fertigungsmaschinen und Fertigungsanlagen mit einem energiesparenden Ruhemodus auszustatten, in welchen diese sich selbständig bei anhaltender Untätigkeit versetzen können. Das Vorhandensein des Ruhemodus bei einer immer größeren Zahl von Fertigungsmaschinen und Fertigungsanlagen trägt einerseits dem Gedanken des Umweltschutzes, insbesondere der Reduzierung von $CO_2$-Emissionen, Rechnung. Andererseits trägt der Ruhemodus aber auch zur Vermeidung von unnötigen Herstellungskosten bei, da gerade Fertigungsmaschinen und Fertigungsanlagen einen vergleichsweise hohen Energiebedarf aufweisen. Dies schlägt sich in nicht zu unterschätzenden Energiekosten nieder, welche die Herstellungskosten eines Produkts in die Höhe treiben und damit seine Wettbewerbsfähigkeit verringern.

In diesem Zusammenhang offenbart die DE 11 2009 004 354 T5 ein System und ein Verfahren zur Verringerung eines Ruheleistungsabflusses. Dabei weist eine Maschine eine Vielzahl von elektronischen Steuervorrichtungen auf, die elektrisch mit einer elektrischen Leistungsquelle einerseits über einen ersten elektrischen Schaltkreis durch ein erstes Relais und andererseits über einen zweiten elektrischen Schaltkreis durch ein zweites Relais verbunden sind. Eine Relaissteuervorrichtung ist mit der elektrischen Leistungsquelle über einen dritten elektrischen Schaltkreis verbunden und steht gleichzeitig in Verbindung mit dem ersten und dem zweiten Relais. Die Relaissteuervorrichtung ist derart konfiguriert, dass sie das erste Relais oder das zweite Relais ansprechend auf eine Leistungsanforderungsanzeige öffnet oder schließt. Somit kann ein unnötiger Leistungsabfluss in einem Ruhezustand der Maschine vermieden werden.

Die DE 10 2004 030 312 A1 offenbart eine Elektrowerkzeugsteuervorrichtung für ein Elektrowerkzeug. Die Steuervorrichtung wird während eines Arbeitseinsatzes des Elektrowerkzeugs mit der vollen Netzspannung beaufschlagt, während sie im Ruhezustand nur noch mit einer erheblich reduzierten Spannung versorgt wird. Gemäß der DE 10 2004 030 312 A1 erhält die Steuervorrichtung im Ruhezustand gerade so viel Spannung, dass sie eine Standby-Funktion ausführen kann. Die Standby-Funktion kann z.B. aus der elektrischen Versorgung eines Mikrocontrollers bzw. einer Elektronik zur Drehzahlregelung des Elektrowerkzeugs bestehen. Dies reduziert die Belastung der Steuervorrichtung und verbessert den Wirkungsgrad. Der Ruhezustand stellt also einen Energiesparmodus des Elektrowerkzeugs dar, um den Stromverbrauch abseits des Arbeitseinsatzes des Elektrowerkzeugs so gering wie möglich zu halten.

Aus der WO 2013/143585 A1 ist ein Verfahren zur Unterstützung bei der Ermittlung einer energieeffizienten Steuerungssequenz einer industriellen Anlage bekannt, bei der Anlagen-Komponenten logische Abhängigkeiten zu einer oder mehreren anderen Anlagen-Komponenten aufweisen können. Das Verfahren der WO 2013/143585 A1 verwendet zu jeder der Anlagen-Komponente Informationen über einen komponentenspezifische Leistungsaufnahmeverlauf während einer vordefinierten Betriebssequenz der Komponente.

Die bekannten Vorrichtungen und Verfahren sind jedoch insofern nachteilbehaftet, als dass sie sich auf den Leistungsbedarf einer Anlage oder auf den Energieverbrauch ausschließlich einer einzelnen Werkzeugmaschine konzentrieren, ohne deren Einbindung in ein System aus mehreren Werkzeugmaschinen zu berücksichtigen und insbesondere ohne deren energetisches Zusammenwirken mit dem System zu berücksichtigen. Mögliche Energieeinsparungen durch eine bessere Abstimmung der Werkzeugmaschine untereinander bleiben daher weitgehend unberücksichtigt.

Es ist eine Aufgabe der Erfindung, ein verbessertes Verfahren zur Ermittlung eines energieeffizienten Arbeitspunkts einer Werkzeugmaschine eines Werkzeugmaschinensystems vorzuschlagen.

Diese Aufgabe wird erfindungsgemäß durch das Verfahren zur Ermittlung eines energieeffizienten Arbeitspunkts einer Werkzeugmaschine eines Werkzeugmaschinensystems gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Ermittlung eines energieeffizienten Arbeitspunkts einer Werkzeugmaschine eines Werkzeugmaschinensystems, wobei der Werkzeugmaschine in zeitlicher Abfolge gleiche Werkstücke zur Bearbeitung zuführbar sind, wobei die Werkzeugmaschine eine arbeitspunktabhängige Maschinentaktzeit und einen arbeitspunktabhängigen Leistungsbedarf aufweist, wobei das Werkzeugmaschinensystem mindestens zwei Werkzeugmaschinen umfasst und eine Systemtaktzeit aufweist und wobei die Maschinentaktzeit kleiner als die Systemtaktzeit ist. Das erfindungsgemäße Verfahren zeichnet sich dadurch aus, dass der energieeffiziente Arbeitspunkt nach Maßgabe einer Energiebedarfskennfunktion der Werkzeugmaschine ermittelt wird, wobei die Energiebedarfskennfunktion einen maschinentaktzeitabhängigen Energiebedarf der Werkzeugmaschine über die Systemtaktzeit darstellt.

Da die Energiebedarfskennfunktion also den Energiebedarf der Werkzeugmaschine abhängig von der Maschinentaktzeit darstellt, kann anhand der Energiebedarfskennfunktion vergleichsweise einfach ein möglichst energieeffizienter Arbeitspunkt der Werkzeugmaschine ermittelt werden. Die Energiebedarfskennfunktion kann beispielsweise experimentell mittels einer Versuchsreihe oder auch rechnerisch anhand von bekannten Eigenschaften der Werkzeugmaschine bestimmt werden. Indem die Energiebedarfskennfunktion den Energiebedarf der Werkzeugmaschine über die Systemtaktzeit, d.h. während der zeitlichen Dauer einer Systemtaktzeit beschreibt, wird erfindungsgemäß also nicht nur eine isolierte Optimierung des Energiebedarfs der einzelnen Werkzeugmaschine während der Maschinentaktzeit durchgeführt, sondern vielmehr eine Optimierung des Energiebedarfs der Werkzeugmaschine im Hinblick auf ihre Einbettung in das vollständige Werkzeugmaschinensystem und ihr Zusammenspiel mit dem vollständigen Werkzeugmaschinensystem.

Unter dem Begriff "Arbeitspunkt" wird im Sinne der Erfindung die Leistungsaufnahme der Werkzeugmaschine abhängig von der Maschinentaktzeit der Werkzeugmaschine verstanden. Im Stand der Technik ist es oftmals üblich, den Arbeitspunkt derart zu wählen, dass die Werkzeugmaschine im Bereich nahe ihrer maximalen Leistung betrieben wird. Dies bedeutet also, dass der Leistungsbedarf der Werkzeugmaschine in der Regel vergleichsweise hoch ist, wohingegen die Maschinentaktzeit der Werkzeugmaschine in der Regel vergleichsweise gering ist. Ein Reduzieren des Arbeitspunkts der Werkzeugmaschine führt zwar zu einer reduzierten Leistungsaufnahme der Werkzeugmaschine, allerdings auch zu einer Erhöhung der Maschinentaktzeit. Da somit also eine zwar reduzierte Leistungsaufnahme einer jedoch verlängerten Maschinentaktzeit und damit einer verlängerten zeitlichen Arbeitsleistungsaufnahme gegenübersteht, führt eine Reduzierung des Arbeitspunkts nicht zwangsläufig zu einem energieeffizienteren Arbeitspunkt.

Unter dem Begriff "Maschinentaktzeit" wird im Sinne der Erfindung die zeitliche Dauer verstanden, welche die Werkzeugmaschine zur Bearbeitung eines einzelnen Werkstücks benötigt. Die Maschinentaktzeit bezeichnet somit den Durchsatz der Werkzeugmaschine von Werkstücken je Zeiteinheit.

Unter dem Begriff "Systemtaktzeit" wird im Sinne der Erfindung die zeitliche Dauer verstanden, welche das Werkzeugmaschinensystem zur Bearbeitung eines einzelnen Werkstücks benötigt. Die Systemtaktzeit ist in der Regel maßgeblich geprägt durch die längste Maschinentaktzeit der vom Werkzeugmaschinensystem umfassten Werkzeugmaschinen. Die Systemtaktzeit bezeichnet somit den Durchsatz des Werkzeugmaschinensystems von Werkstücken je Zeiteinheit.

Unter dem Begriff "energieeffizienter Arbeitspunkt" wird im Sinne der Erfindung derjenige Arbeitspunkt der Werkzeugmaschine verstanden, an welchem diese im Hinblick auf ihre Einbindung in das vollständige Werkzeugmaschinensystem, d.h., im Zusammenspiel mit weiteren Werkzeugmaschinen des Werkzeugmaschinensystems den insgesamt geringsten Energiebedarf aufweist, ohne die Arbeitspunkte der weiteren Werkzeugmaschinen zu ändern. Der "energieeffiziente Arbeitspunkt" bezeichnet also nicht notwendigerweise den insgesamt energieeffizientesten Arbeitspunkt der Werkzeugmaschine, sondern lediglich den ohne Beeinflussung anderer Werkzeugmaschinen des Werkzeugmaschinensystems erreichbaren energieeffizientesten Arbeitspunkt der Werkzeugmaschine. Da ein Werkzeugmaschinensystem üblicherweise eine Vielzahl von Werkzeugmaschinen umfasst, deren Zusammenwirken langwierig und fein abgestimmt wurde, um einen möglichst robusten und komplikationsfreien Herstellungsprozess zu ermöglichen, ist das erfindungsgemäße Verfahren bevorzugt auf den genannten Rahmen beschränkt.

Unter dem Begriff "Werkzeugmaschine" wird im Sinne der Erfindung jegliche Art von Maschine verstanden, welche in der Lage ist, ein Werkstück zu bearbeiten. Beispielsweise kann die Werkzeugmaschine dazu ausgebildet sein, das Werkstück zu gießen, zu feilen, zu fräsen, zu bohren, zu lackieren oder zu erhitzen.

Erfindungsgemäß ist es weiterhin vorgesehen, dass die Energiebedarfskennfunktion unter Heranziehen einer maschinentaktzeitabhängigen Leistungsbedarfskennlinie bestimmt wird. Eine Änderung des Arbeitspunkts der Werkzeugmaschine führt, wie bereits beschrieben, einerseits zu einer Änderung des Leistungsbedarfs der Werkzeugmaschine während der Maschinentaktzeit und andererseits zu einer Änderung der Maschinentaktzeit. Nach dem Ende des Arbeitsvorgangs, also nach Ablauf der Maschinentaktzeit, befindet sich die Werkzeugmaschine üblicherweise in einem Ruhemodus, der bis zum Ende der Systemtaktzeit andauert, also die zeitliche Differenz zwischen Systemtaktzeit und Maschinentaktzeit andauert. In diesem Ruhemodus weist die Werkzeugmaschine einen weitgehend konstanten und insbesondere maschinentaktzeitunabhängigen Leistungsbedarf auf. Das Heranziehen der maschinentaktzeitabhängigen Leistungsbedarfskennlinie als Grundlage zur Bestimmung der Energiebedarfskennfunktion führt somit zu einer belastbaren Energiebedarfskennfunktion, da die Energiebedarfskennfunktion also den Energiebedarf der Werkzeugmaschine im Hinblick auf ihr Einbindung in das Werkzeugmaschinensystem beschreibt.

Indem der maschinentaktzeitabhängige Leistungsbedarf der Werkzeugmaschine über die Maschinentaktzeit integriert wird, ergibt sich der Energiebedarf der Werkzeugmaschine über die Maschinentaktzeit. Dieser Energiebedarf während der Maschinentaktzeit stellt den Hauptteil des Gesamtenergiebedarfs der Werkzeugmaschine während der Systemtaktzeit dar. Sofern der maschinentaktzeitabhängige Leistungsbedarf der Werkzeugmaschine über die Systemtaktzeit integriert wird, ergibt sich der vollständige Energiebedarf der Werkzeugmaschine über die Systemtaktzeit.

Bevorzugt ist es vorgesehen, dass die Leistungsbedarfskennlinie eine Gerade ist, welche mittels Erfassen von unterschiedlichen Arbeitspunkten und Anpassen der Geraden an die unterschiedlichen Arbeitspunkte bestimmt wird. Somit wird die Leistungsbedarfskennlinie also experimentell erfasst. Dies führt in aller Regel zum Erhalt einer zuverlässigen und praxisnahen Leistungsbedarfskennlinie.

Da die Maschinentaktzeit mit steigender Leistung, bzw. mit Erhöhen des Arbeitspunktes reduziert wird, weist die Gerade, welche die Leistungsbedarfskennlinie darstellt, ein negatives Vorzeichen auf.

Unter dem "Begriff Anpassen der Geraden" wird im Sinne der Erfindung verstanden, dass die Leistungsbedarfskennlinie bzw. die Gerade bestmöglich durch die unterschiedlichen Arbeitspunkte, bzw. durch die durch die unterschiedlichen Arbeitspunkte dargestellten Maschinentaktzeiten und Leistungsbedarfe, gefittet wird.

Erfindungsgemäßist es weiterhin vorgesehen, dass die Energiebedarfskennfunktion eine Parabel ist, wobei die Parabel durch die Gleichung $\Sigma E(t_{MTZ}) = (m \cdot t_{MTZ} + b) \cdot t_{MTZ} + P_{Ruhe} \cdot t_{Ruhe}$ bestimmt ist, wobei $\Sigma E(t_{MTZ})$ ein maschinentaktzeitabhängiger Energiebedarf der Werkzeugmaschine über die Systemtaktzeit ist, wobei der Faktor $(m \cdot t_{MTZ} + b)$ die maschinentaktzeitabhängige Leistungsbedarfskennlinie ist, wobei $t_{MTZ}$ die Maschinentaktzeit ist, wobei $t_{Ruhe}$ eine Ruhezeit der Werkzeugmaschine nach Ende der Maschinentaktzeit bis zum Ende der Systemtaktzeit ist und wobei $P_{Ruhe}$ ein Leistungsbedarf der Werkzeugmaschine während der Ruhezeit ist. Die Energiebedarfskennfunktion beschreibt also den maschinentaktzeitabhängigen Energiebedarf der Werkzeugmaschine während der Systemtaktzeit in Form einer nach unten geöffneten Parabel. Es hat sich nämlich herausgestellt, dass sich eine solcherart bestimmte Energiebedarfskennfunktion zuverlässig eignet, um den energieeffizienten Arbeitspunkt der Werkzeugmaschine zu ermitteln.

Bevorzugt ist es vorgesehen, dass die Ruhezeit die Summe über alle diejenigen Zeiten ist, in denen die Werkzeugmaschine sich nicht in einem Arbeitsmodus befindet. Die Ruhezeit kann beispielsweise die Zeit in einem sog. Grundmodus, einem sog. Nebenmodus und einem sog. Standby-Modus umfassen, wobei jeder der genannten Modi einen individuellen Leistungsbedarf der Werkzeugmaschine aufweist. Üblicherweise fährt die Werkzeugmaschine mit zunehmender Ruhezeit immer weitere Werkzeugmaschinenkomponenten herunter, um weitere Energieeinsparungen zu ermöglichen, und nähert sich somit stufenweise immer weiter dem Standby-Modus an, der in der Regel den geringsten Leistungsbedarf aufweist. Sofern es sich bei der Werkzeugmaschine beispielsweise um eine Schleifmaschine zum Schleifen von Zahnradverzahnungen handelt, kann unmittelbar bei Eintritt der Ruhezeit zunächst in den Nebenmodus geschaltet werden. Im Nebenmodus werden zunächst ausschließlich die Achsantriebe, welche das zu schleifende Zahnrad halten und gemäß den Anforderungen des Schleifvorgangs bewegen, abgeschaltet. Mit fortschreitender Ruhezeit kann die Werkzeugmaschine dann in den Grundmodus übergehen. Im Grundmodus wird die Hauptspindel deaktiviert und weiterhin die pneumatischen und hydraulischen Komponenten der Werkzeugmaschine abgeschaltet. Mit nochmals fortschreitender Ruhezeit schließlich können auch Kühlsysteme und elektronische Steuerungssysteme der Werkzeugmaschine abgeschaltet werden. Somit wird also der Leistungsbedarf der Werkzeugmaschine während der Ruhezeit stufenweise zunehmend reduziert.

Erfindungsgemäß ist es weiterhin vorgesehen, dass ein Schnittpunkt der Parabel mit der Systemtaktzeit bestimmt wird und dass eine gedachte Horizontale durch den Schnittpunkt gelegt wird. Dies hat sich als besonders geeigneter Zwischenschritt auf dem Weg zur zuverlässigen Ermittlung des energieeffizienten Arbeitspunkts der Werkzeugmaschine erwiesen.

Erfindungsgemäßist es weiterhin vorgesehen, dass der Arbeitspunkt der Werkzeugmaschine auf den Schnittpunkt gelegt wird, wenn der maschinentaktzeitabhängige Energiebedarf der Werkzeugmaschine oberhalb der Horizontalen liegt. Dies entspricht also einer Reduzierung des Arbeitspunkts. Es hat sich nämlich gezeigt, dass in diesem Fall durch eine Reduzierung des Arbeitspunkts auf den Schnittpunkt eine Reduzierung des Energiebedarfs der Werkzeugmaschine möglich ist, obwohl die Maschinentaktzeit, d.h. diejenige Zeit, in welcher sich die Werkzeugmaschine im Arbeitsmodus befindet und einen vergleichsweise hohen Leistungsbedarf aufweist, hierdurch verlängert wird.

Gemäß einer weiteren besonders bevorzugten Ausführungsform der Erfindung ist es vorgesehen, dass der energieeffiziente Arbeitspunkt unter Beibehaltung der Systemtaktzeit ermittelt wird. Somit führt das erfindungsgemäße Verfahren also vorteilhafterweise nicht zu einer Verlängerung der Systemtaktzeit und damit nicht zu einer Verlangsamung der Herstellung von Werkstücken. Vielmehr wird die Systemtaktzeit und damit der Durchsatz von Werkstücken des Werkzeugmaschinensystems pro Zeiteinheit beibehalten.

Gemäß einer weiteren bevorzugten Ausführungsform der Erfindung ist es vorgesehen, dass der energieeffiziente Arbeitspunkt hinsichtlich eines elektrischen Energiebedarfs der Werkzeugmaschine ermittelt wird. Da der elektrische Energiebedarf üblicherweise den Hauptteil des Gesamtenergiebedarfs gegenwertiger Werkzeugmaschinen ausmacht, konzentriert sich die Erfindung vorteilhaft hierauf. Zudem lässt sich der elektrische Energiebedarf vergleichsweise einfach messen und kontrollieren. Insbesondere wird der energieeffiziente Arbeitspunkt der Werkzeugmaschine nicht hinsichtlich eines auf Gas, Öl oder Kohle basierenden Energiebedarfs ermittelt.

Gemäß einer weiteren bevorzugten Ausführungsform der Erfindung ist es vorgesehen, dass das Verfahren für jede Werkzeugmaschine, deren Maschinentaktzeit kleiner als die Systemtaktzeit ist, wiederholt wird. Daraus ergibt sich der Vorteil, dass für jede einzelne Werkzeugmaschine des Werkzeugmaschinensystems jeweils ein energieeffizienter Arbeitspunkt ermittelt wird. Darüber hinaus kann der tatsächliche Arbeitspunkt jeder Werkzeugmaschine anschließend auf den ermittelten energieeffizienten Arbeitspunkt angepasst werden. Indem für jede Werkzeugmaschine des Werkzeugmaschinensystems, deren Maschinentaktzeit kleiner als die Systemtaktzeit ist, jeweils ein energieeffizienter Arbeitspunkt unter Berücksichtigung der Einbindung der Werkzeugmaschine in das Werkzeugmaschinensystem ermittelt wird, wird also für das Werkzeugmaschinensystem als Ganzes ein energieeffizienter Arbeitspunkt ermittelt. Somit ermöglicht das erfindungsgemäße Verfahren also nicht nur eine Energieeinsparung an einer einzelnen Werkzeugmaschine, sondern vielmehr am vollständigen Werkzeugmaschinensystem, welches eine Vielzahl von Werkzeugmaschinen umfassen kann.

Bevorzugt ist es vorgesehen, dass das Werkzeugmaschinensystem dazu ausgebildet ist, die Werkstücke spanend zu bearbeiten. Da die spanende Bearbeitung von Werkstücken besonders energieaufwändig ist, kann hier durch das erfindungsgemäße Verfahren eine große Energieeinsparung realisiert werden.

Besonders bevorzugt ist es vorgesehen, dass alle der mindestens zwei Werkzeugmaschinen dazu ausgebildet sind, die Werkstücke spanend zu bearbeiten. Alternativ ist es jedoch möglich und bevorzugt, dass nur eine einzelne oder einige der Werkzeugmaschinen dazu ausgebildet sind, die Werkstücke spanend zu bearbeiten.

Gemäß einer weiteren besonders bevorzugten Ausführungsform der Erfindung ist es vorgesehen, dass das Werkzeugmaschinensystem dazu ausgebildet ist, die Werkstücke schleifend und/oder fräsend und/oder drehend zu bearbeiten. Das erfindungsgemäße Verfahren hat sich bei der Anwendung in einem derartigen Werkzeugmaschinensystem hinsichtlich der möglichen Energieeinsparungen als besonders vorteilhaft und energieeffizient erwiesen.

Ein Schleifprozess bzw. ein Fräsprozess bzw. ein Drehprozess umfassen üblicherweise einen Schruppvorgang sowie einen darauf folgenden Schlichtvorgang. Der Schruppvorgang umfasst dabei das Abheben von Werkstoff von den Werkstücken mit vergleichsweise großem Spanvolumen. Dabei dient der Schruppvorgang dazu, innerhalb möglichst kurzer Bearbeitungszeit das Werkstück der gewünschten Endkontur soweit wie möglich anzunähern. Entsprechend handelt es sich bei Schruppwerkzeugen üblicherweise um vergleichsweise grobzahnige Werkzeuge mit großer Schnitttiefe. Der Schruppvorgang hinterlässt in der Regel eine vergleichsweise raue Oberfläche mit nur geringer Maßgenauigkeit. Die exakte und gewünschte Endkontur eines Werkstücks wird hingegen im darauf folgenden Schlichtvorgang erzeugt. Schlichtwerkzeuge sind daher üblicherweise wesentlich feinzahniger und weisen eine vergleichsweise geringere Schnitttiefe auf, sodass eine vergleichsweise glattere Oberfläche erzielt wird.

Gemäß einer weiteren besonders bevorzugten Ausführungsform der Erfindung ist es vorgesehen, dass das Werkzeugmaschinensystem dazu ausgebildet ist, Zahnradverzahnungen zu schleifen und/oder zu fräsen. Da gerade das Schleifen bzw. das Fräsen von Zahnradverzahnungen besonders energieaufwändig ist, ergeben sich hier durch das erfindungsgemäße Verfahren große Möglichkeiten für Energieeinsparungen.

Gemäß einer nochmals weiteren besonders bevorzugten Ausführungsform der Erfindung ist es vorgesehen, dass der Arbeitspunkt durch eine Schruppzeit und eine Schruppleistung bestimmt ist. Die Erfindung konzentriert sich somit bevorzugt also auf den Schruppvorgang, da dieser einerseits den größten Energieaufwand aufweist und andererseits ohne Rücksicht auf die erzeugte Oberflächenrauigkeit des Werkstücks verändert werden kann, da die Oberflächenrauigkeit bzw. Konturgenauigkeit ohnehin erst im folgenden Schlichtvorgang wunschgemäß erzeugt wird.

Insbesondere ist der Arbeitspunkt bevorzugt nicht durch eine Schlichtzeit und eine Schlichtleistung bestimmt. Eine Änderung der Schlichtzeit und der Schlichtleistung hätte unmittelbare Auswirkungen auf die erzeugte Werkstückqualität. Die Anforderungen an die Werkstückqualität stehen jedoch in der Regel fest. Obwohl eine Änderung der Schlichtzeit und der Schlichtleistung also zu einer Energieersparnis führen könnte, hätte dies jedoch in der Regel unerwünschte Auswirkungen auf die Werkstückqualität.

Die Erfindung betrifft weiterhin eine Vorrichtung zur Ermittlung eines energieeffizienten Arbeitspunktes einer Werkzeugmaschine eines Werkzeugmaschinensystems, wobei der Werkzeugmaschine in zeitlicher Abfolge gleiche Werkstücke zur Bearbeitung zuführbar sind, wobei das Werkstückmaschinensystem mindestens zwei Werkzeugmaschinen umfasst und eine Systemtaktzeit aufweist, wobei die Vorrichtung dazu ausgebildet ist, mittels Zeiterfassungsmitteln eine arbeitspunktabhängige Maschinentaktzeit sowie mittels Leistungserfassungsmitteln einen arbeitspunktabhängigen Leistungsbedarf der Werkzeugmaschine zu erfassen und wobei die Maschinentaktzeit kleiner als die Systemtaktzeit ist. Die erfindungsgemäße Vorrichtung zeichnet sich dadurch aus, dass die Vorrichtung dazu ausgebildet ist, mittels Bestimmungsmitteln den energieeffizienten Arbeitspunkt nach Maßgabe einer Energiebedarfskennfunktion der Werkzeugmaschine zu ermitteln, wobei die Energiebedarfskennfunktion einen maschinentaktzeitabhängigen Energiebedarf der Werkzeugmaschine über die Systemtaktzeit darstellt. Da die erfindungsgemäße Vorrichtung also alle zur Ausführung des erfindungsgemäßen Verfahrens notwendigen Mittel umfasst, ermöglicht sie die im Zusammenhang mit dem erfindungsgemäßen Verfahren bereits beschriebenen Vorteile.

Bei den Zeiterfassungsmitteln kann es sich beispielsweise um einen schwingquarzbasierten Taktgeber handeln, dessen Taktsignale einen vorgegebenen zeitlichen Abstand aufweisen und von einem Zählwerk gezählt und aufsummiert werden. Das Zählwerk wiederum kann als elektronisches Zählwerk ausgeführt sein und z.B. in ein elektronisches Rechenwerk, insbesondere einen Mikrocontroller, integriert sein.

Bei den Leistungserfassungsmitteln kann es sich beispielsweise um bekannte Spannungserfassungsmittel und bekannte Stromerfassungsmitteln handeln. Sowohl die Spannungserfassungsmittel als auch die Stromerfassungsmittel können beispielsweise die Spannung bzw. den Strom in vorgegebenen Zeitintervallen erfassen und aus dem erfassten Strom und der erfassten Spannung rechnerisch die von der Werkzeugmaschine aufgenommene Leistung bestimmen. Zur rechnerischen Bestimmung der Leistung können die Leistungserfassungsmittel beispielsweise weiterhin ein elektronisches Rechenwerk umfassen, welches den erfassten Strom mit der erfassten Spannung multipliziert und den solcherart ermittelten Wert dann auf eine Sekunde normiert, um die Leistungsaufnahme der Werkzeugmaschine zu bestimmen.

Die Bestimmungsmittel können beispielsweise ebenfalls als elektronisches Rechenwerk ausgebildet sein, insbesondere als Mikrocontroller. Bevorzugt sind dem elektronischen Rechenwerk auf Datenebene elektronische Speichermittel angegliedert, auf welche das elektronische Rechenwerk lesend und schreibend zugreifen kann.

Besonders bevorzugt sind die Bestimmungsmittel weiterhin dazu ausgebildet, die Zeiterfassungsmittel und die Leistungserfassungsmittel auszulesen.

Um den energieeffizienten Arbeitspunkt der Werkzeugmaschine zu ermitteln, können die Bestimmungsmittel beispielsweise einen hierfür ausgelegten Softwarealgorithmus ausführen, wobei der Softwarealgorithmus die Bestimmungsmittel bzw. die Vorrichtung anleitet, das erfindungsgemäße Verfahren auszuführen. Der Softwarealgorithmus ist bevorzugt in den elektronischen Speichermitteln abgelegt.

Gemäß einer bevorzugten Ausführungsform der Erfindung ist es vorgesehen, dass die Vorrichtung konstruktiv und funktional in das Werkzeugmaschinensystem integriert ist. Daraus ergibt sich der Vorteil, dass hinsichtlich der erforderlichen Mittel und Hardwareressourcen zur Ausführung des erfindungsgemäßen Verfahrens auf ohnehin im Werkzeugmaschinensystem vorhandene Hardware zurückgegriffen werden kann. Dies reduziert den Aufwand zur Implementierung der erfindungsgemäßen Vorrichtung in ein Werkzeugmaschinensystem. Alternativ kann die erfindungsgemäße Vorrichtung jedoch auch konstruktiv und funktional losgelöst von einem Werkzeugmaschinensystem bestehen. In letzterem Fall kann beispielsweise über eine kabelgebundene Datenverbindung die zur Ausführung des erfindungsgemäßen Verfahrens notwendige Anbindung an das Werkzeugmaschinensystem hergestellt werden.

Besonders bevorzugt ist die Vorrichtung konstruktiv und funktional in eine der Werkzeugmaschinen des Werkzeugmaschinensystems integriert. Da viele Werkzeugmaschinen oftmals ohnehin eine aufwändige und leistungsfähige Steuer- bzw. Regelelektronik umfassen, kann die Vorrichtung auch in eine derartige Werkzeugmaschine konstruktiv und funktional integriert werden.

Unter dem Begriff "konstruktiv integriert" wird im Sinne der Erfindung verstanden, dass die Vorrichtung mit den benötigten Mitteln in eine Steuereinheit einer Werkzeugmaschine des Werkzeugmaschinensystems oder unmittelbar in eine Steuereinheit des Werkzeugmaschinensystems baulich integriert ist.

Unter dem Begriff "funktional integriert" wird im Sinne der Erfindung verstanden, dass die Vorrichtung auf im Werkzeugmaschinensystem bzw. auf in einer Werkzeugmaschine ohnehin vorhandene Hardware und Mittel zugreift, um diese zur Ausführung des erfindungsgemäßen Verfahrens zu verwenden.

Gemäß einer weiteren bevorzugten Ausführungsform der Erfindung ist es vorgesehen, dass die Vorrichtung zur Ausführung des erfindungsgemäßen Verfahrens ausgebildet ist. Hieraus ergeben sich die bereits genannten Vorteile.

Die Erfindung betrifft schließlich auch ein Werkzeugmaschinensystem, umfassend eine erfindungsgemäße Vorrichtung. Die im Zusammenhang mit der erfindungsgemäßen Vorrichtung genannten Vorteile ergeben sich somit auch im Hinblick auf das erfindungsgemäße Werkzeugmaschinensystem.

Nachfolgend wird die Erfindung anhand von in den Figuren dargestellten Ausführungsformen beispielhaft erläutert.

Es zeigen:

Fig. 1    beispielhaft und schematisch eine mögliche Ausführungsform eines erfindungsgemäßen Werkzeugmaschinensystems,

Fig. 2    beispielhaft und schematisch eine weitere mögliche Ausführungsform eines erfindungsgemäßen Werkzeugmaschinensystems,

Fig. 3    beispielhaft eine maschinentaktzeitabhängige Leistungsbedarfskennlinie,

Fig. 4    beispielhaft eine maschinentaktzeitabhängige Energiebedarfskennfunktion,

Fig. 5    beispielhaft einen Energiebedarf einer Werkzeugmaschine über eine Systemtaktzeit und

Fig. 6    eine beispielhafte Ausführungsform eines erfindungsgemäßen Verfahrens in Form eines Flussdiagramms.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

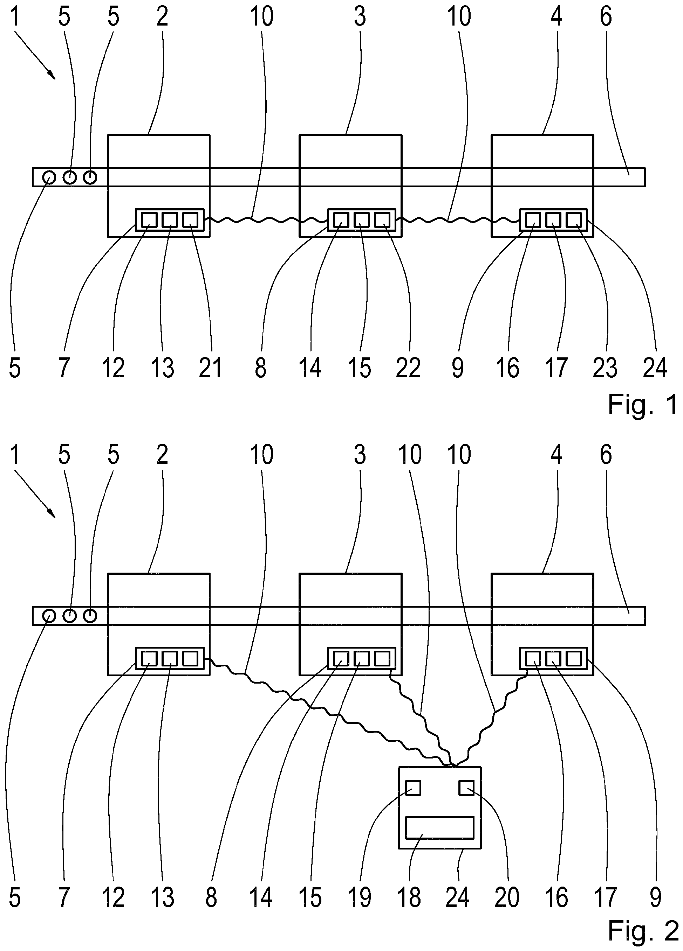

Fig. 1 zeigt beispielhaft und schematisch eine mögliche Ausführungsform eines erfindungsgemäßen Werkzeugmaschinensystems 1. Das beispielhaft dargestellte Werkzeugmaschinensystem 1 umfasst drei Werkzeugmaschinen 2, 3 und 4. Die Werkzeugmaschine 2 umfasst ihrerseits eine Steuereinheit 7. Die Steuereinheit 7 wiederum umfasst beispielsgemäß Zeiterfassungsmittel 12, Leistungserfassungsmittel 13 sowie ein elektronisches Rechenwerk 21. Die Werkzeugmaschine 3 umfasst eine Steuereinheit 8, welche ihrerseits Zeiterfassungsmittel 14, Leistungserfassungsmittel 15 und ein elektronisches Rechenwerk 22 umfasst. Die Werkzeugmaschine 4 schließlich umfasst eine Steuereinheit 9. Die Steuereinheit 9 umfasst ihrerseits Zeiterfassungsmittel 16, Leistungserfassungsmittel 17 und ein elektronisches Rechenwerk 23. Eine erfindungsgemäße Vorrichtung 24 zur Ermittlung eines energieeffizienten Arbeitspunkts einer Werkzeugmaschine eines Werkzeugmaschinensystems ist beispielsgemäß konstruktiv und funktional in die Steuereinheit 9 integriert. Die Steuereinheit 9 sowie die Vorrichtung 24 sind damit identisch. Das elektronische Rechenwerk 23 dient entsprechend nicht nur zur Steuerung und Regelung der Werkzeugmaschine 4, sondern darüber hinaus als Bestimmungsmittel 23 der Vorrichtung 24. Dem elektronischen Rechenwerk 23 sind zudem nicht dargestellte Speichermittel auf Datenebene angegliedert. Ebenso dienen die Zeiterfassungsmittel 16 und als Leistungserfassungsmittel 17 der Steuereinheit 9 als Zeiterfassungsmittel 16 und die Leistungserfassungsmittel 17 der Vorrichtung 24. Über eine Datenanbindung 10 ist die Steuereinheit 24 bzw. die Vorrichtung 24 mit der Steuereinheit 8 und der Steuereinheit 7 verbunden. Über die Datenanbindung 10 kann die Steuereinheit 9 bzw. die Vorrichtung 9 die Zeiterfassungsmittel 14 und die Leistungserfassungsmittel 15 der Steuereinheit 8 sowie die Zeiterfassungsmittel 12 und die Leistungserfassungsmittel 13 der Steuereinheit 7 auslesen. Das beispielhaft dargestellt Werkzeugmaschinensystem 1 umfasst außerdem ein Förderband 6, auf welchem Werkstücke 5 angeordnet sind. Bei den Werkstücken 5 handelt es sich um gleiche, d. h. identische Werkstücke 5, welche beispielsgemäß als metallische Zylinder ausgebildet sind. Die Werkstücke 5 werden in zeitlicher Abfolge der Werkzeugmaschine 2, der Werkzeugmaschine 3 und der Werkzeugmaschine 4 zugeführt. Die Werkzeugmaschine 2 weist eine Maschinentaktzeit auf, welche beispielsgemäß 20 s beträgt. Dies bedeutet also, dass die Werkzeugmaschine 2 zur Bearbeitung eines Werkstücks 5 20 s benötigt. Beispielsgemäß führt die Werkzeugmaschine 2 einen Fräsvorgang an den Werkstücken 5 aus und wird mit maximaler Leistung betrieben. Das bedeutet, dass sie im größtmöglichen Arbeitspunkt 31, 44, 45, 46 betrieben wird. Nachdem die Werkzeugmaschine 2 die Bearbeitung eines Werkstücks 5 beendet hat, wird das Werkstück 5 über das Förderband 6 der Werkzeugmaschine 3 zugeführt. Die Werkzeugmaschine 3 weist beispielsgemäß eine Maschinentaktzeit von 16 s auf, was bedeutet, dass die Bearbeitungsdauer der Werkzeugmaschine 3 für ein Werkstück 5 16 s beträgt. Auch die Werkzeugmaschine 3 wird mit maximaler Leistung betrieben, was dem größtmöglichen Arbeitspunkt 31, 45, 46 entspricht. Beispielsgemäß handelt es sich bei der Werkzeugmaschine 3 um eine Schleifmaschine welche einen Schruppvorgang und einen Schlichtvorgang an den Werkstücken 5 ausführt. Die Werkzeugmaschine 4 weist beispielsgemäß eine Maschinentaktzeit von 18 s auf, was bedeutet, dass sie zur Bearbeitung eines Werkstücks 5 18 s benötigt. Auch die Werkzeugmaschine 4 wird beispielsgemäß mit maximaler Leistung, d. h. im größtmöglichen Arbeitspunkt 44 betrieben. Beispielsgemäß handelt es sich bei der Werkzeugmaschine 4 um einen Ofen, welcher die Werkstücke 5 thermisch behandelt. Da die Systemtaktzeit $t_1$, also die Gesamtbearbeitungsdauer für ein Werkstück 5 durch das Werkstückmaschinensystem 1, beispielsgemäß durch die größte Maschinentaktzeit geprägt ist bzw. dieser entspricht, beträgt die Systemtaktzeit $t_1$ also 20 s. Da die Steuereinheit 9 die Zeiterfassungsmittel 16, die Leistungserfassungsmittel 17 und die Bestimmungsmittel 18 umfasst, entspricht sie, wie bereits beschrieben, der erfindungsgemäßen Vorrichtung 24. Beispielsgemäß führt sie zudem das erfindungsgemäße Verfahren aus. Im Zuge der Ausführung des erfindungsgemäßen Verfahrens variiert die Steuereinheit 9 bzw. die Vorrichtung 24 zunächst den Arbeitspunkt 31, 44, 45, 46 der Werkzeugmaschine 3. Durch die Änderung ihres Arbeitspunkts 31, 44, 45, 46 ändern sich auch der Leistungsbedarf der Werkzeugmaschine 3 sowie die Maschinentaktzeit der Werkzeugmaschine 3. Der Arbeitspunkt 31, 44, 45, 46 ist dabei jeweils definiert durch den Leistungsbedarf der Werkzeugmaschine 3 bei einer gegebenen Maschinentaktzeit der Werkzeugmaschine 3. Die Vorrichtung 24 erfasst also die unterschiedlichen Arbeitspunkte 31, 44, 45, 46 der Werkzeugmaschine 3 und passt rechnerisch eine Gerade 30 durch die unterschiedlichen Arbeitspunkte 31, 44, 45, 46 an. Diese Gerade 30 stellt eine maschinentaktzeitabhängige Leistungsbedarfskennlinie 30 dar. Mittels der solcherart bestimmten Leistungsbedarfskennlinie 30 ermittelt die Vorrichtung 24 nun eine maschinentaktzeitabhängige Energiebedarfskennfunktion 40, die als Parabel 40 ausgebildet ist. Die maschinentaktzeitabhängige Energiebedarfskennfunktion 40 stellt dabei den Energiebedarf der Werkzeugmaschine 3 in Abhängigkeit von der Maschinentaktzeit der Werkzeugmaschine 3 dar. Weiterhin bestimmt die Vorrichtung 9 einen Schnittpunkt 42 auf der Parabel 40 mit der Systemtaktzeit $t_1$. Ein Vergleich der Lage des standardmäßig gewählten größtmöglichen Arbeitspunkts 31, 45, 46 der Werkzeugmaschine 3, welcher auf der Parabel 40 liegt, mit der Lage der Horizontalen 48, zeigt beispielsgemäß, dass der Arbeitspunkt 31, 45, 46 der Werkzeugmaschine 3 oberhalb der Horizontalen 48 liegt. Die Vorrichtung 9 passt daher den Arbeitspunkt 31, 45, 46 der Werkzeugmaschine 3 dahingehend an, dass dieser nun auf dem Schnittpunkt 42 liegt. Dementsprechend ändert sich die Maschinentaktzeit der Werkzeugmaschine 3 auf 20 s. Dies führt zu einer Energieeinsparung der Werkzeugmaschine 3. Weiterhin führt die Steuereinheit 9 bzw. die Vorrichtung 24 das erfindungsgemäße Verfahren in identischer Weise noch einmal für die Werkzeugmaschine 4 aus. Dabei ergibt sich, dass ein standardmäßig gewählter maximaler Arbeitspunkt 44 der Werkzeugmaschine 4 unterhalb der Horizontalen 48 auf der Parabel 40 liegt. Dies bedeutet, dass eine Energieeinsparung bei der Werkzeugmaschine 4 durch eine Änderung der Maschinentaktzeit bzw. durch eine Änderung des Arbeitspunkts 44 der Werkzeugmaschine 4 ohne eine Verlängerung der Systemtaktzeit $t_1$ nicht möglich ist. Entsprechend wird die Maschinentaktzeit bzw. der Arbeitspunkt 44 der Werkzeugmaschine 4 beibehalten. Auf eine nochmalige Ausführung des erfindungsgemäßen Verfahrens für die Werkzeugmaschine 2 wird verzichtet, da die Systemtaktzeit $t_1$ durch die Maschinentaktzeit der Werkzeugmaschine 2 geprägt ist bzw. dieser entspricht. Eine Reduzierung des Arbeitspunkts 31, 44, 45, 46 der Werkzeugmaschine 2 hätte eine Erhöhung der Maschinentaktzeit der Werkzeugmaschine 2 und damit eine Erhöhung der Systemtaktzeit $t_1$ zur Folge. Da die Systemtaktzeit $t_1$ beispielsgemäß jedoch beibehalten wird, um die Herstellung bzw. Bearbeitung der Werkstücke 5 nicht zu verzögern, wird, wie beschrieben, auf eine Änderung des Arbeitspunkts 31, 44, 45, 46 der Werkzeugmaschine 2 verzichtet. Die Werkzeugmaschinen 2, 3 und 4 arbeiten somit jeweils in einem energieeffizienten Arbeitspunkt 31, 44, 45, 46 unter Beibehaltung der Systemtaktzeit $t_1$ von 20 s. Damit arbeitet auch das Werkzeugmaschinensystem 1 in einem energieeffizienten Arbeitspunkt.

Gemäß eines weiteren, in Fig. 2 schematisch dargestellten Ausführungsbeispiels einer erfindungsgemäßen Vorrichtung 24, ist die erfindungsgemäße Vorrichtung 24 konstruktiv, d. h. baulich, unabhängig von den Werkzeugmaschinen 2, 3 und 4. In diesem Fall ist die Vorrichtung 24 über geeignete Datenanbindungen 10 mit den Steuereinheiten 7, 8 und 9 der Werkzeugmaschinen 2, 3 und 4 verbunden. Obwohl die erfindungsgemäße Vorrichtung 24 beispielsgemäß also konstruktiv unabhängig von den Werkzeugmaschinen 2, 3, und 4 ist, ist sie dennoch funktional teilweise insofern in diese integriert, als dass sie auf in den Werkzeugmaschinen 2, 3 und 4 vorhandene Zeiterfassungsmittel 12, 14 bzw. 16 und in den Werkzeugmaschinen 2, 3 und 4 vorhandene Leistungserfassungsmittel 13, 15 bzw. 17 zur Ausführung des erfindungsgemäßen Verfahrens zurückgreift.

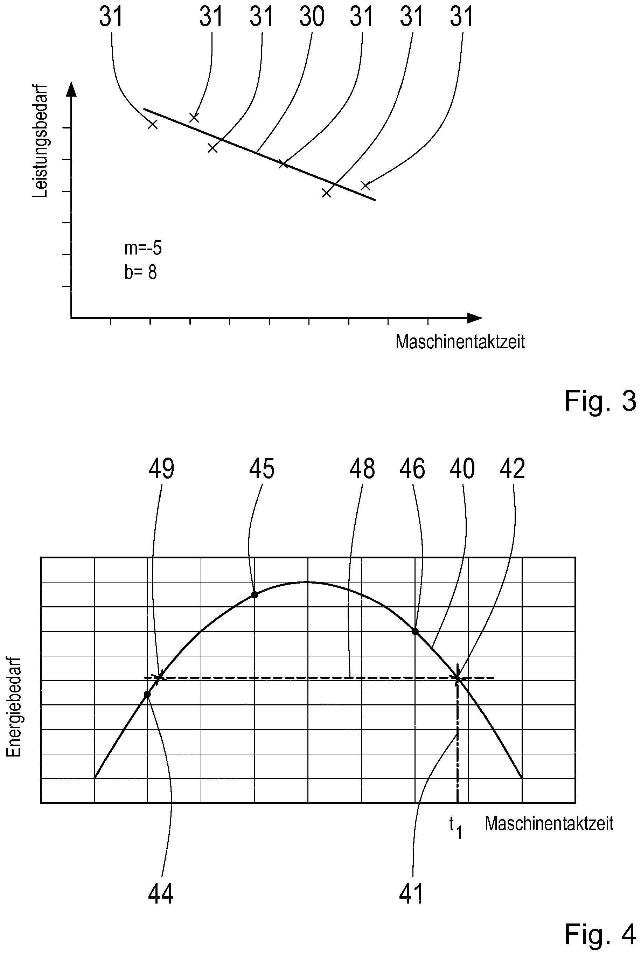

Fig. 3 zeigt beispielhaft und schematisch eine maschinentaktzeitabhängige Leistungsbedarfskennlinie 30, welche als Gerade 30 ausgebildet ist. Die Leistungsbedarfskennlinie 30 wurde bestimmt, indem zuvor unterschiedliche Arbeitspunkte 31 einer Werkzeugmaschine 2, 3 oder 4 erfasst wurden. Die Leistungsbedarfskennlinie 30 ist dabei aufgetragen in einem Koordinatensystem, welches an seiner x-Achse die Maschinentaktzeit darstellt und an seiner y-Achse den Leistungsbedarf darstellt. Die Leistungsbedarfskennlinie 30 wurde durch Anpassen, d.h. durch Fitten, der Geraden 30 durch die unterschiedlichen Arbeitspunkte 31 bestimmt. Wie zu sehen ist, fällt die Gerade 30 mit zunehmender Maschinentaktzeit ab, was bedeutet, dass mit zunehmender Maschinentaktzeit auch der Leistungsbedarf während der Maschinentaktzeit reduziert wird. Da die Gerade 30 also mit zunehmender Maschinentaktzeit abfällt, weist die Steigung der zugehörigen Geradengleichung entsprechend ein negatives Vorzeichen auf. Aus der solcherart durch Anpassen an die unterschiedlichen Arbeitspunkte 31 bestimmten Leistungsbedarfskennlinie 30 kann nun rechnerisch die bekannte Geradengleichung der Form $y = mx + b$ ermittelt werden. Beispielsgemäß ergibt die rechnerische Ermittlung der Geradengleichung für die Steigung m der Leistungsbedarfskennlinie 30 einen Wert von -5 und für den Achsenabschnitt $b$ der Leistungsbedarfskennlinie 30 einen Wert von 8. Die solcherart definierte Geradengleichung kann nun herangezogen werden, um die maschinentaktzeitabhängige Energiebedarfskennfunktion 40 zu ermitteln.

Fig. 4 zeigt beispielhaft eine maschinentaktzeitabhängige Energiebedarfskennfunktion 40 einer Werkzeugmaschine 2, 3 oder 4. Die Energiebedarfskennfunktion 40 beschreibt den Energiebedarf der Werkzeugmaschine 2, 3 oder 4 über die Systemtaktzeit $t_1$ und ist beispielsgemäß als nach unten geöffnete Parabel 40 ausgebildet. Diese Form der Energiebedarfskennfunktion 40 ergibt sich aus der zugrunde liegenden Gleichung $\Sigma E(t_{MTZ}) = (m \cdot t_{MTZ} + b) \cdot t_{MTZ} + P_{Warten} \cdot t_{Warten}$, welche ein Polynom zweiter Ordnung darstellt. Aufgrund der negativen Steigung der Leistungsbedarfskennlinie 30 weist der Faktor m ein negatives Vorzeichen auf, was dazu führt, dass die Parabel 40 nach unten geöffnet ist. Die Energiebedarfskennfunktion 40 zeigt anschaulich, dass der Energiebedarf der Werkzeugmaschine 2, 3 oder 4 bei mittlerem Leistungsbedarf und mittlerer Maschinentaktzeit am größten ist, wohingegen bei geringem Leistungsbedarf und entsprechend großer Maschinentaktzeit und umgekehrt bei hohem Leistungsbedarf und entsprechend geringer Maschinentaktzeit eine Energieersparnis möglich ist. Die beispielhaft gezeigte Energiebedarfskennfunktion 40 ist in einem Koordinatensystem dargestellt, dessen x-Achse die Maschinentaktzeit angibt und dessen y-Achse den Energiebedarf der Werkzeugmaschine 2, 3 oder 4 während der Systemtaktzeit $t_1$ angibt. Der Zeitpunkt $t_1$ bezeichnet die Systemtaktzeit $t_1$. Ausgehend vom Zeitpunkt $t_1$ ist senkrecht nach oben eine gestrichpunktete Linie 41 geführt. Die gestrichpunktete Linie 41 schneidet die Parabel 40 an einem Schnittpunkt 42. Ausgehend vom Schnittpunkt 42 wird nun eine gedachte Horizontale 48 gebildet. Der Kurvenverlauf der Parabel 40 beschreibt beispielhaft unterschiedliche Arbeitspunkte 44, 45, 46 einer zugehörigen Werkzeugmaschine 2, 3 oder 4. Im Falle des Arbeitspunkts 44 ist die Maschinentaktzeit vergleichsweise kurz. Da der Arbeitspunkt 44 jedoch unterhalb der Horizontalen 48 liegt, ist durch eine Änderung des Arbeitspunkts 44 keine Energieersparnis möglich. Im Falle des Arbeitspunkts 45 jedoch ist durch eine Änderung des Arbeitspunkts 45 eine Energieersparnis möglich, da der Arbeitspunkt 45 oberhalb der Horizontalen 48 liegt. Beispielsgemäß wird der Arbeitspunkt 45 daher dahingehend reduziert, dass er auf dem Schnittpunkt 42 zu liegen kommt. Dies erhöht die Maschinentaktzeit dahingehend, dass sie der Systemtaktzeit $t_1$ entspricht und führt gleichzeitig zu einer Energieersparnis. Ebenso wäre auch eine Erhöhung des Arbeitspunkts 45 dahingehend möglich, dass er auf einen Bereich der Parabel 40 unterhalb eines weiteren Schnittpunkts 49 gelegt wird. Dies würde ebenfalls zu einer Energieersparnis der Werkzeugmaschine 2, 3 oder 4 führen, ohne dabei die Systemtaktzeit $t_1$ zu beeinflussen oder sonstige Auswirkungen auf das Werkzeugmaschinensystem 1 zu entfalten. Dies ist jedoch nur möglich, wenn die Werkzeugmaschine 2, 3 oder 4, die in Arbeitspunkt 45 arbeitet, entsprechende Leistungsreserven aufweist, was beispielsgemäß jedoch nicht der Fall ist. Ebenso ist im Falle des Arbeitspunkts 46 eine Energieersparnis möglich, da auch der Arbeitspunkt 46 oberhalb der Horizontalen 48 liegt. Indem der Arbeitspunkt 46 auf den Schnittpunkt 42 verschoben wird, wird auch in diesem Fall die Maschinentaktzeit erhöht, so dass sie der Systemtaktzeit $t_1$ entspricht. Auch dies führt zu einer Energieersparnis. Alternativ könnte, um eine Energieersparnis zu erzielen, der Arbeitspunkt 46 auch auf den Bereich der Parabel 40 unterhalb des weiteren Schnittpunkts 49 gelegt werden. Jedoch sind auch in diesem Fall die beispielsgemäßen Leistungsreserven der Werkzeugmaschine 2, 3 bzw. 4 nicht ausreichend für eine derartige Erhöhung des Arbeitspunkts 46.

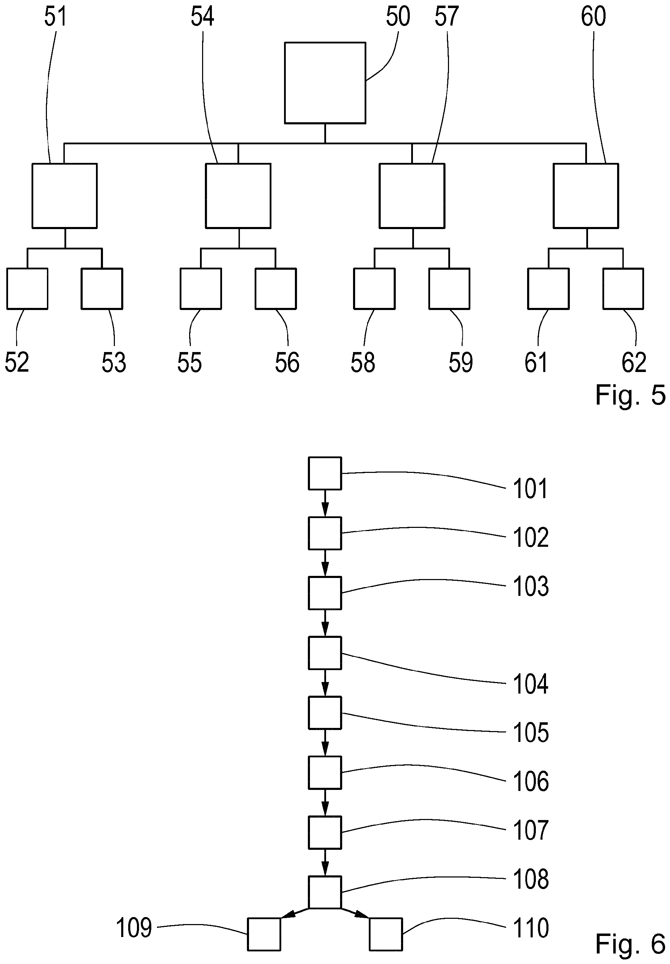

Fig. 5 zeigt beispielhaft einen Energiebedarf 50 einer Werkzeugmaschine 2, 3 bzw. 4 während einer Systemtaktzeit $t_1$. Der Energiebedarf 50 setzt sich, wie zu sehen ist, aus den in den unterschiedlichen Betriebsmodi von einer Werkzeugmaschine 2, 3 bzw. 4 benötigten Leistungen 52, 55, 58, 61 sowie den in den unterschiedlichen Betriebsmodi verbrachten Zeiten 53, 56, 59, 62 zusammen. Die Gesamtenergie 50 setzt sich beispielsgemäß zusammen aus einer Teilenergie 51 im Bearbeitungsmodus, wobei die Teilenergie 51 sich aus einer im Bearbeitungsmodus benötigten Leistung 52 sowie der Maschinentaktzeit 53 ergibt. Weiterhin setzt die Gesamtenergie 50 sich aus einer Teilenergie 54 zusammen, welche die Werkzeugmaschine 2, 3 bzw. 4 im Nebenmodus benötigt. Die Teilenergie 54 ergibt sich aus einer im Nebenmodus benötigten Leistung 55 und einer im Nebenmodus verbrachten Zeit 56. Weiterhin setzt sich die Gesamtenergie 50 aus einer Teilenergie 57 zusammen, welche die Werkzeugmaschine 2, 3 bzw. 4 im Leerlaufmodus benötigt. Die Teilenergie 57 wiederum ergibt sich aus der im Leerlaufmodus benötigten Leistung 58 und der Zeit 59, welche die Werkzeugmaschine im Leerlaufmodus verbringt. Schließlich setzt sich die Gesamtenergie 50 auch aus der Teilenergie 60 zusammen, welche die Werkzeugmaschine 2, 3 bzw. 4 im Standby-Modus benötigt. Die Teilenergie 60 wiederum ergibt sich aus der im Standby-Modus benötigten Leistung 61 sowie der Zeit 62, welche die Werkzeugmaschine im Standby-Modus verbringt.

Fig. 6 zeigt eine beispielhafte Ausführungsform eines erfindungsgemäßen Verfahrens in Form eines Flussdiagramms. In Verfahrensschritt 101 werden zunächst einer Werkzeugmaschine 2, 3 bzw. 4 eines Werkzeugmaschinensystems 1 in zeitlicher Abfolge gleiche Werkstücke 5 zur Bearbeitung zugeführt. Die Werkzeugmaschine 2, 3 bzw. 4 weist dabei eine arbeitspunktabhängige Maschinentaktzeit und einen arbeitspunktabhängigen Leistungsbedarf auf. Im folgenden Verfahrensschritt 102 wird der Arbeitspunkt 31, 44, 45 bzw. 46 der Werkzeugmaschine 2, 3 bzw. 4 variiert, sodass in Verfahrensschritt 103 jeweils die Maschinentaktzeit und der Leistungsbedarf der Werkzeugmaschine 2, 3 bzw. 4 bei den unterschiedlichen Arbeitspunkten 31, 44, 45, 46 erfasst werden können. Im folgenden Verfahrensschritt 104 wird nun eine Gerade 30 durch die unterschiedlichen erfassten Arbeitspunkte 31, 44, 45, 46 angepasst. Diese Gerade stellt die Leistungsbedarfskennlinie 30 dar. In Schritt 105 wird die Leistungsbedarfskennlinie 30 herangezogen, um die Energiebedarfskennfunktion 40 der Werkzeugmaschine 2, 3 bzw. 4 zu ermitteln. Die Energiebedarfskennfunktion 40 stellt beispielsgemäß eine Parabel 40 dar. Im nun folgenden Schritt 106 wird ein Schnittpunkt 42 der Parabel 40 mit der Systemtaktzeit $t_1$ bestimmt. In Schritt 107 wird eine gedachte Horizontale 48 durch den Schnittpunkt 42 gelegt. Anhand der aktuellen Maschinentaktzeit wird nun der tatsächliche Arbeitspunkt 31, 44, 45 bzw. 46 der Werkzeugmaschine 2, 3 bzw. 4 auf der Parabel 40 bestimmt. Sofern der tatsächliche Arbeitspunkt 31, 44, 45 bzw. 46 der Werkzeugmaschine 2, 3 bzw. 4 unterhalb der Horizontalen 48 liegt, ist in Schritt 109 keine Energieeinsparung möglich. Die Werkzeugmaschine 2, 3 bzw. 4 befindet sich bereits in einem energieeffizienten Arbeitspunkt 31, 44, 45 bzw. 46 unter Beibehaltung der aktuellen Systemtaktzeit $t_1$. Sofern der aktuelle Arbeitspunkt 31, 44, 45 bzw. 46 jedoch oberhalb der Horizontalen 48 auf der Parabel 40 liegt, so ist in Verfahrensschritt 110 eine Energieeinsparung möglich, indem der Arbeitspunkt 31, 44, 45 bzw. 46 auf den Schnittpunkt 42 gelegt wird. Dies führt einerseits zu einer Erhöhung der Maschinentaktzeit dahingehend, dass sie der Systemtaktzeit $t_1$ entspricht und andererseits zu einer Energieersparnis. Die Werkzeugmaschine 2, 3 bzw. 4 befindet sich damit in einem energieeffizienten Arbeitspunkt 31, 44, 45 bzw. 46.

Bezugszeichen

| | |
|---|---|
| 1 | Werkzeugmaschinensystem |
| 2 | Werkzeugmaschine |
| 3 | Werkzeugmaschine |
| 4 | Werkzeugmaschine |
| 5 | Werkstück |
| 6 | Förderband |
| 7 | Steuereinheit der Werkzeugmaschine 2 |
| 8 | Steuereinheit der Werkzeugmaschine 3 |
| 9 | Steuereinheit der Werkzeugmaschine 4, Vorrichtung |
| 10 | Datenanbindung |
| 11 | Datenanbindung |
| 12 | Zeiterfassungsmittel der Steuereinheit 7 |
| 13 | Leistungserfassungsmittel Steuereinheit 7 |
| 14 | Zeiterfassungsmittel der Steuereinheit 8 |
| 15 | Leistungserfassungsmittel der Steuereinheit 8 |
| 16 | Zeiterfassungsmittel der Steuereinheit 9 |
| 17 | Leistungserfassungsmittel der Steuereinheit 9 |
| 18 | Bestimmungsmittel |
| 21 | elektronisches Rechenwerk |
| 22 | elektronisches Rechenwerk |
| 23 | elektronisches Rechenwerk |

| 24 | Vorrichtung |
|---|---|
| 30 | Leistungsbedarf-Kennlinie |
| 31 | Arbeitspunkt |
| 40 | Energiebedarf-Kennfunktion |
| 41 | die Systemtaktzeit darstellende Linie |
| 42 | Schnittpunkt |
| 44 | Arbeitspunkt |
| 45 | Arbeitspunkt |
| 46 | Arbeitspunkt |
| 48 | Horizontale |
| 49 | weiterer Schnittpunkt |
| 50 | Gesamtenergiebedarf über die Systemtaktzeit |
| 51 | Teilenergiebedarf über die Maschinentaktzeit |
| 52 | Leistungsbedarf über die Maschinentaktzeit |
| 53 | Maschinentaktzeit |
| 54 | Teilenergiebedarf in der Nebenmoduszeit |
| 55 | Leistungsbedarf über die Nebenmoduszeit |
| 56 | Nebenmoduszeit |
| 57 | Teilenergiebedarf in der Leerlaufmoduszeit |
| 58 | Leistungsbedarf über die Leerlaufmoduszeit |
| 59 | Leerlaufmoduszeit |
| 60 | Teilenergiebedarf in der Standby-Moduszeit |
| 61 | Leistungsbedarf über die Standby-Moduszeit |
| 62 | Standby-Moduszeit |
| 101 | Zuführen von Werkstücken |
| 102 | Ändern des Arbeitspunkts |
| 103 | Erfassen der Maschinentaktzeit und des Leistungsbedarfs |
| 104 | Anpassen der Leistungsbedarfskennlinie |
| 105 | Ermitteln der Energiebedarfskennfunktion |
| 106 | Bestimmen des ersten Punkts |
| 107 | Legen einer Horizontalen durch den ersten Punkt |
| 108 | Bestimmen des tatsächlichen Arbeitspunkts |
| 109 | Energieeinsparung nicht möglich |
| 110 | Ändern des Arbeitspunkts |
| $t_1$ | Systemtaktzeit |

## Patentansprüche

1. Verfahren zur Ermittlung eines energieeffizienten Arbeitspunkts (31, 44, 45, 46) einer Werkzeugmaschine (2, 3, 4) eines Werkzeugmaschinensystems (1), wobei der Werkzeugmaschine (2, 3, 4) in zeitlicher Abfolge gleiche Werkstücke (5) zur Bearbeitung zuführbar sind, wobei die Werkzeugmaschine (2, 3, 4) eine arbeitspunktabhängige Maschinentaktzeit und einen arbeitspunktabhängigen Leistungsbedarf aufweist, wobei das Werkzeugmaschinensystem mindestens zwei Werkzeugmaschinen (2, 3, 4) umfasst und eine Systemtaktzeit ($t_1$) aufweist und wobei die Maschinentaktzeit kleiner als die Systemtaktzeit ($t_1$) ist, wobei der energieeffiziente Arbeitspunkt (31, 44, 45, 46) nach Maßgabe einer maschinentaktzeitabhängigen Energiebedarfskennfunktion der Werkzeugmaschine (2, 3, 4) ermittelt wird, wobei die Energiebedarfskennfunktion einen maschinentaktzeitabhängigen Energiebedarf der Werkzeugmaschine (2, 3, 4) über die Systemtaktzeit ($t_1$) darstellt, wobei der energieeffizienteste Arbeitspunkt (31, 44, 45, 46) unter Beibehaltung der Systemtaktzeit ($t_1$) ermittelt wird, wobei die Energiebedarfskennfunktion unter Heranziehen einer maschinentaktzeitabhängigen Leistungsbedarfskennlinie (30) bestimmt wird, wobei die Energiebedarfskennfunktion (40) eine Parabel (40) ist, wobei die Parabel (40) durch die Gleichung

$$\sum E(t_{MTZ}) = (m \cdot t_{MTZ} + b) \cdot t_{MTZ} + P_{Warten} \cdot t_{Warten}$$

bestimmt ist, wobei $\sum E(t_{MTZ})$ ein maschinentaktzeitabhängiger Energiebedarf der Werkzeugmaschine (2, 3, 4) über die Systemtaktzeit ($t_1$) ist, wobei der Faktor ($m \cdot t_{MTZ} + b$) die maschinentaktzeitabhängige Leistungsbedarfskennlinie (40) ist, wobei $t_{MTZ}$ die Maschinentaktzeit ist, wobei $t_{Warten}$ eine Wartezeit der Werkzeugmaschine (2, 3, 4) nach Ende der Maschinentaktzeit bis zum Ende der Systemtaktzeit ($t_1$) ist, wobei $P_{Warten}$ ein Leistungsbedarf der Werkzeugmaschine (2, 3, 4) während der Wartezeit ist und wobei m ein negatives Vorzeichen aufweist, wobei ein Schnittpunkt (42) der Parabel (40) mit der Systemtaktzeit ($t_1$) bestimmt wird, wobei eine gedachte Horizontale (48) durch den Schnittpunkt (42) gelegt wird und wobei der Arbeitspunkt (31, 44, 45, 46) der Werkzeugmaschine (2, 3, 4) auf den Schnittpunkt (42) gelegt wird, wenn der maschinentaktzeitabhängige Energiebedarf der Werkzeugmaschine (2, 3, 4) oberhalb der Horizontalen (48) liegt.

2. Verfahren nach Anspruch 1,
**dadurch gekennzeichnet, dass** der energieeffizienteste Arbeitspunkt (31, 44, 45, 46) hinsichtlich eines elektrischen Energiebedarfs der Werkzeugmaschine (2, 3, 4) ermittelt wird.

3. Verfahren nach mindestens einem der Ansprüche 1 und 2,
**dadurch gekennzeichnet, dass** das Verfahren für jede Werkzeugmaschine(2, 3, 4), deren Maschinentaktzeit kleiner als die Systemtaktzeit ($t_1$) ist, wiederholt wird.

4. Verfahren nach mindestens einem der Ansprüche 1 und 3,
**dadurch gekennzeichnet, dass** das Werkzeugmaschinensystem (1) dazu ausgebildet ist, die Werkstücke (5) schleifend und/oder fräsend und/oder drehend zu bearbeiten.

5. Verfahren nach Anspruch 4,
**dadurch gekennzeichnet, dass** das Werkzeugmaschinensystem (1) dazu ausgebildet ist, Zahnradverzahnungen zu schleifen und/oder zu fräsen.

6. Verfahren nach mindestens einem der Ansprüche 4 und 5,
**dadurch gekennzeichnet, dass** der Arbeitspunkt (31, 44, 45, 46) durch eine Schruppzeit und eine Schruppleistung bestimmt ist.

7. Vorrichtung (9, 24) zur Ermittlung eines energieeffizienten Arbeitspunkts (31, 44, 45, 46) einer Werkzeugmaschine (2, 3, 4) eines Werkzeugmaschinensystems (1), wobei der Werkzeugmaschine (2, 3, 4) in zeitlicher Abfolge gleiche Werkstücke (5) zur Bearbeitung zuführbar sind, wobei das Werkzeugmaschinensystem (1) mindestens zwei Werkzeugmaschinen (2, 3, 4) umfasst und eine Systemtaktzeit ($t_1$) aufweist, wobei die Vorrichtung (9, 24) dazu ausgebildet ist, mittels Zeiterfassungsmitteln (12, 14, 16) eine arbeitspunktabhängige Maschinentaktzeit sowie mittels Leistungserfassungsmitteln (13, 15, 17) einen arbeitspunktabhängigen Leistungsbedarf der Werkzeugmaschine (2, 3, 4) zu erfassen und wobei die Maschinentaktzeit kleiner als die Systemtaktzeit ($t_1$) ist, wobei die Vorrichtung (9, 24) dazu ausgebildet ist, mittels Bestimmungsmitteln (18, 21, 22, 23) den energieeffizienten Arbeitspunkt (31, 44, 45, 46) nach Maßgabe einer maschinentaktzeitabhängigen Energiebedarfskennfunktion (40) der Werkzeugmaschine (2, 3, 4) zu ermitteln, wobei die Energiebedarfskennfunktion (40) einen maschinentaktzeitabhängigen Energiebedarf der Werkzeugmaschine (2, 3, 4) über die Systemtaktzeit ($t_1$) darstellt, wobei die Vorrichtung (9, 24) dazu ausgebildet ist, den energieeffizientesten Arbeitspunkt (31, 44, 45, 46) unter Beibehaltung der Systemtaktzeit ($t_1$) zu ermitteln, wobei die Vorrichtung (9, 24) dazu ausgebildet ist, die Energiebedarfskennfunktion unter Heranziehen einer maschinentaktzeitabhängigen Leistungsbedarfskennlinie (30) zu bestimmen, wobei die Energiebedarfskennfunktion (40) eine Parabel (40) ist, wobei die Parabel (40) durch die Gleichung

$$\sum E(t_{MTZ}) = (m \cdot t_{MTZ} + b) \cdot t_{MTZ} + P_{Warten} \cdot t_{Warten}$$

bestimmt ist, wobei $\Sigma E(t_{MTZ})$ ein maschinentaktzeitabhängiger Energiebedarf der Werkzeugmaschine (2, 3, 4) über die Systemtaktzeit ($t_1$) ist, wobei der Faktor ($m \cdot t_{MTZ} + b$) die maschinentaktzeitabhängige Leistungsbedarfskennlinie (40) ist, wobei $t_{MTZ}$ die Maschinentaktzeit ist, wobei $t_{Warten}$ eine Wartezeit der Werkzeugmaschine (2, 3, 4) nach Ende der Maschinentaktzeit bis zum Ende der Systemtaktzeit ($t_1$) ist, wobei $P_{Warten}$ ein Leistungsbedarf der Werkzeugmaschine (2, 3, 4) während der Wartezeit ist und wobei m ein negatives Vorzeichen aufweist, wobei die Vorrichtung (9, 24) dazu ausgebildet ist, einen Schnittpunkt (42) der Parabel (40) mit der Systemtaktzeit ($t_1$) zu bestimmen, wobei die Vorrichtung (9, 24) dazu ausgebildet ist, eine gedachte Horizontale (48) durch den Schnittpunkt (42) zu legen und wobei die Vorrichtung (9, 24) dazu ausgebildet ist, den Arbeitspunkt (31, 44, 45, 46) der Werkzeugmaschine (2, 3, 4) auf den Schnittpunkt (42) zu legen, wenn der maschinentaktzeitabhängige Energiebedarf der Werkzeugmaschine (2, 3, 4) oberhalb der Horizontalen (48) liegt.

8. Vorrichtung (9, 24) nach Anspruch 7,

**dadurch gekennzeichnet, dass** die Vorrichtung (9, 24) konstruktiv und funktional in das Werkzeugmaschinensystem (1) integriert ist.

9. Vorrichtung (9, 24) nach mindestens einem der Ansprüche 7 und 8,
   **dadurch gekennzeichnet, dass** die Vorrichtung (9, 24) zur Ausführung eines Verfahrens nach mindestens einem der Ansprüche 1 bis10 ausgebildet ist.

10. Werkzeugmaschinensystem (1), umfassend eine Vorrichtung (9, 24) nach mindestens einem der Ansprüche 7 bis 9.

## Claims

1. Method for ascertaining an energy-efficient operating point (31, 44, 45, 46) of a machine tool (2, 3, 4) of a machine tool system (1), wherein identical workpieces (5) are able to be supplied to the machine tool (2, 3, 4) in a chronological sequence for machining, wherein the machine tool (2, 3, 4) has an operating-point-dependent machine cycle time and an operating-point-dependent power demand, wherein the machine tool system comprises at least two machine tools (2, 3, 4) and has a system cycle time ($t_1$) and wherein the machine cycle time is shorter than the system cycle time ($t_1$), wherein the energy-efficient operating point (31, 44, 45, 46) is ascertained according to a machine-cycle-time-dependent energy demand characteristic function of the machine tool (2, 3, 4), wherein the energy demand characteristic function represents a machine-cycle-time-dependent energy demand of the machine tool (2, 3, 4) over the system cycle time ($t_1$), wherein the most energy-efficient operating point (31, 44, 45, 46) is ascertained while maintaining the system cycle time ($t_1$), wherein the energy demand characteristic function is determined by using a machine-cycle-time-dependent power demand characteristic curve (30), wherein the energy demand characteristic function (40) is a parabola (40), wherein the parabola (40) is determined by the equation

$$\sum E(t_{MTZ}) = (m \cdot t_{MTZ} + b) \cdot t_{MTZ} + P_{Warten} \cdot t_{Warten},$$

wherein $\Sigma E(t_{MTZ})$ is a machine-cycle-time-dependent energy demand of the machine tool (2, 3, 4) over the system cycle time ($t_1$), wherein the factor ($m \cdot t_{MTZ} + b$) is the machine-cycle-time-dependent power demand characteristic curve (40), wherein $t_{MTZ}$ is the machine cycle time, wherein $t_{Warten}$ is a waiting time of the machine tool (2, 3, 4) after the end of the machine cycle time until the end of the system cycle time ($t_1$), wherein $P_{Warten}$ is a power demand of the machine tool (2, 3, 4) during the waiting time and wherein m has a negative arithmetic sign, wherein a point of intersection (42) at which the parabola (40) intersects the system cycle time ($t_1$) is determined, wherein an imaginary horizontal line (48) is placed through the point of intersection (42) and wherein the operating point (31, 44, 45, 46) of the machine tool (2, 3, 4) is placed on the point of intersection (42) if the machine-cycle-time-dependent energy demand of the machine tool (2, 3, 4) lies above the horizontal line (48) .

2. Method according to Claim 1,
   **characterized in that** the most energy-efficient operating point (31, 44, 45, 46) with regard to an electrical energy demand of the machine tool (2, 3, 4) is ascertained.

3. Method according to at least one of Claims 1 and 2,
   **characterized in that** the method is repeated for every machine tool (2, 3, 4) for which the machine cycle time is shorter than the system cycle time ($t_1$).

4. Method according to at least one of Claims 1 and 3,
   **characterized in that** the machine tool system (1) is designed to machine the workpieces (5) by grinding and/or milling and/or turning.

5. Method according to Claim 4,
   **characterized in that** the machine tool system (1) is designed to grind and/or to mill gearwheel toothing systems.

6. Method according to at least one of Claims 4 and 5,
   **characterized in that** the operating point (31, 44, 45, 46) is determined by a roughing time or a roughing power.

7. Device (9, 24) for ascertaining an energy-efficient operating point (31, 44, 45, 46) of a machine tool (2, 3, 4) of a machine tool system (1), wherein identical workpieces (5) are able to be supplied to the machine tool (2, 3, 4) in a chronological sequence for machining, wherein the machine tool system (1) comprises at least two machine tools (2, 3, 4) and has a system cycle time ($t_1$), wherein the device (9, 24) is designed to record an operating-point-dependent machine cycle time by means of time recording means (12, 14, 16) and an operating-point-dependent power demand of the machine tool (2, 3, 4) by means of power recording means (13, 15, 17) and wherein the machine cycle time is shorter than the system cycle time ($t_1$), wherein the device (9, 24) is designed to use determining means (18, 21, 22, 23) to ascertain the energy-efficient operating point (31, 44, 45, 46) according to a machine-cycle-time-dependent energy demand characteristic function (40) of the machine tool (2, 3, 4), wherein the energy demand characteristic function (40) represents a machine-cycle-time-dependent energy demand of the machine tool (2, 3, 4) over the system cycle time ($t_1$), wherein the device (9, 24) is designed to ascertain the most energy-efficient operating point (31, 44, 45, 46) while maintaining the system cycle time ($t_1$), wherein the device (9, 24) is designed to determine the energy demand characteristic function by using a machine-cycle-time-dependent power demand characteristic curve (30), wherein the energy demand characteristic function (40) is a parabola (40), wherein the parabola (40) is determined by the equation

$$\sum E(t_{MTZ}) = (m \cdot t_{MTZ} + b) \cdot t_{MTZ} + P_{Warten} \cdot t_{Warten},$$

wherein $\Sigma E(t_{MTZ})$ is a machine-cycle-time-dependent energy demand of the machine tool (2, 3, 4) over the system cycle time ($t_1$), wherein the factor ($m \cdot t_{MTZ} + b$) is the machine-cycle-time-dependent power demand characteristic curve (40), wherein $t_{MTZ}$ is the machine cycle time, wherein $t_{Warten}$ is a waiting time of the machine tool (2, 3, 4) after the end of the machine cycle time until the end of the system cycle time ($t_1$), wherein $P_{Warten}$ is a power demand of the machine tool (2, 3, 4) during the waiting time and wherein m has a negative arithmetic sign, wherein the device (9, 24) is designed to determine a point of intersection (42) at which the parabola (40) intersects the system cycle time ($t_1$), wherein the device (9, 24) is designed to place an imaginary horizontal line (48) through the point of intersection (42) and wherein the device (9, 24) is designed to place the operating point (31, 44, 45, 46) of the machine tool (2, 3, 4) on the point of intersection (42) if the machine-cycle-time-dependent energy demand of the machine tool (2, 3, 4) lies above the horizontal line (48).

8. Device (9, 24) according to Claim 7,
   **characterized in that** the device (9, 24) is structurally and functionally integrated into the machine tool system (1) .

9. Device (9, 24) according to at least one of Claims 7 and 8,
   **characterized in that** the device (9, 24) is designed to perform a method according to at least one of Claims 1 to 10.

10. Machine tool system (1), comprising a device (9, 24) according to at least one of Claims 7 to 9.

## Revendications

1. Procédé de détermination d'un point de fonctionnement économe en énergie (31, 44, 45, 46) d'une machine-outil (2, 3, 4) d'un système de machines-outils (1), des pièces identiques (5) pouvant être amenées suivant une séquence temporelle à la machine-outil (2, 3, 4) afin d'être traitées, la machine-outil (2, 3, 4) ayant un temps de cycle machine dépendant du point de fonctionnement et un besoin en puissance dépendant du point de fonctionnement, le système de machines-outils comprenant au moins deux machines-outils (2, 3, 4) et ayant un temps de cycle de système ($t_1$) et le temps de cycle de machine étant inférieur au temps de cycle de système ($t_1$),
   le point de fonctionnement économe en énergie (31, 44, 45, 46) étant déterminé conformément à une fonction caractéristique de besoin d'énergie, dépendant du temps de cycle de machine, de la machine-outil (2, 3, 4), la fonction caractéristique de besoin d'énergie montrant un besoin d'énergie, dépendant du temps de cycle de machine, de la machine-outil (2, 3, 4) en fonction du temps de cycle de système ($t_1$), le point de fonctionnement le plus économe en énergie (31, 44, 45, 46) étant déterminé avec maintien du temps de cycle de système ($t_1$), la fonction caractéristique de besoin d'énergie étant déterminée à l'aide d'une caractéristique de besoin de puissance dépendant du temps de cycle de machine (30), la fonction caractéristique de besoin d'énergie (40) étant une parabole (40), la parabole (40) étant déterminée par l'équation

$$\Sigma E(t_{MTZ}) = (m \cdot t_{MTZ} + b) \cdot t_{MTZ} + P_{Warten} \cdot t_{Warten}$$

$\Sigma E(t_{MTZ})$ étant un besoin d'énergie, dépendant du temps de cycle de machine, de la machine-outil (2, 3, 4) en fonction du temps de cycle de système (t$_1$), le facteur *(m • t$_{MTZ}$ + b)* étant la caractéristique de besoin de puissance (40) dépendant du temps de cycle de machine, t$_{MTZ}$ étant le temps de cycle de machine, t$_{Warten}$ étant un temps d'attente de la machine-outil (2, 3, 4) après la fin du temps de cycle de machine jusqu'à la fin du temps de cycle de système (t$_1$), P$_{Warten}$ étant un besoin de puissance de la machine-outil (2, 3, 4) pendant le temps d'attente et *m* ayant un signe négatif, un point d'intersection (42) de la parabole (40) avec le temps de cycle de système (t$_1$) étant déterminé, une horizontale imaginaire (48) passant par le point d'intersection (42) et le point de fonctionnement (31, 44, 45, 46) de la machine-outil (2, 3, 4) étant placé au point d'intersection (42) si le besoin d'énergie, dépendant du temps de cycle de machine, de la machine-outil (2, 3, 4) est situé au-dessus de l'horizontale (48).

2. Procédé selon la revendication 1,
**caractérisé en ce que** le point de fonctionnement le plus économe en énergie (31, 44, 45, 46) est déterminé par rapport à un besoin d'énergie électrique de la machine-outil (2, 3, 4).

3. Procédé selon l'une au moins des revendications 1 et 2,
**caractérisé en ce que** le procédé est répété pour chaque machine-outil (2, 3, 4) dont le temps de cycle de machine est inférieur au temps de cycle de système (t$_1$).

4. Procédé selon l'une au moins des revendications 1 et 3,
**caractérisé en ce que** le système de machines-outils (1) est conçu pour traiter les pièces (5) par meulage et/ou fraisage et/ou tournage.

5. Procédé selon la revendication 4,
**caractérisé en ce que** le système de machines-outils (1) est conçu pour meuler et/ou fraiser des dentures de roues dentées.

6. Procédé selon l'une au moins des revendications 4 et 5,
**caractérisé en ce que** le point de fonctionnement (31, 44, 45, 46) est déterminé par un temps de dégrossissage et une puissance de dégrossissage.

7. Dispositif (9, 24) de détermination d'un point de fonctionnement économe en énergie (31, 44, 45, 46) d'une machine-outil (2, 3, 4) d'un système de machines-outils (1), des pièces identiques (5) pouvant être amenées suivant une séquence temporelle à la machine-outil (2, 3, 4) afin d'être traitées, le système de machines-outils (1) comprenant au moins deux machines-outils (2, 3, 4) et ayant un temps de cycle de système (t$_1$), le dispositif (9, 24) étant conçu pour détecter à l'aide de moyens de détection de temps (12, 14, 16) un temps de cycle de machine dépendant du point de fonctionnement et, à l'aide de moyens de détection de puissance (13, 15, 17), un besoin de puissance, dépendant du point de fonctionnement, de la machine-outil (2, 3, 4) et le temps de cycle de machine étant inférieur au temps de cycle de système (t$_1$),
le dispositif (9, 24) étant conçu pour déterminer à l'aide de moyens de détermination (18, 21, 22, 23) pour le point de fonctionnement économe en énergie (31, 44, 45, 46) conformément à une fonction caractéristique de besoin d'énergie (40), dépendant du temps de cycle de machine, de la machine-outil (2, 3, 4), la fonction caractéristique de besoin d'énergie (40) montrant un besoin d'énergie de la machine-outil (2, 3, 4), dépendant du temps de cycle de machine, en fonction du temps de cycle de système (t$_1$), le dispositif (9, 24) étant conçu pour déterminer le point de fonctionnement le plus économe en énergie (31, 44, 45, 46) avec maintien du temps de cycle de système (t$_1$), le dispositif (9, 24) étant conçu pour déterminer la fonction caractéristique de besoin d'énergie à l'aide d'une caractéristique de besoin en puissance (30) dépendant du temps de cycle de machine, la fonction caractéristique de besoin d'énergie (40) étant une parabole (40), la parabole (40) étant déterminée par l'équation

$$\Sigma E\,(t_{MTZ})\ =\ (m\ \bullet\ t_{MTZ}\ +\ b)\ \bullet\ t_{MTZ}\ +\ P_{Warten}\ \bullet\ t_{Warten}$$

*ΣE(t$_{MTZ}$)* étant un besoin d'énergie, dépendant du temps de cycle de machine, de la machine-outil (2, 3, 4) en fonction du temps de cycle de système (t$_1$), le facteur *(m • t$_{MTZ}$ + b)* étant la caractéristique de besoin de puissance (40) dépendant du temps de cycle de machine, t$_{MTZ}$ étant le temps de cycle de machine, t$_{Warten}$ étant un temps d'attente de la machine-outil (2, 3, 4) après la fin du temps de cycle de machine jusqu'à la fin du temps de cycle de système (t$_1$), P$_{Warten}$ étant un besoin de puissance de la machine-outil (2, 3, 4) pendant le temps d'attente et *m* ayant un signe négatif, le dispositif (9, 24) étant conçu pour déterminer un point d'intersection (42) de la parabole (40) avec le temps de cycle de système (t$_1$), le dispositif (9, 24) étant conçu pour faire passer une horizontale imaginaire (48) par le point d'intersection (42) et le dispositif (9, 24) étant conçu pour placer le point de fonctionnement (31, 44, 45, 46) de la machine-outil (2, 3, 4) au point d'intersection (42) si le besoin d'énergie, dépendant du temps de cycle de machine, de la machine-outil (2, 3, 4) est situé au-dessus de l'horizontale (48).

8. Dispositif (9, 24) selon la revendication 7, **caractérisé en ce que** le dispositif (9, 24) est structurellement et fonctionnellement intégré dans le système de machines-outils (1).

9. Dispositif (9, 24) selon l'une au moins des revendications 7 et 8, **caractérisé en ce que** le dispositif (9, 24) est conçu pour mettre en œuvre un procédé selon l'une au moins des revendications 1 à 10.

10. Système de machines-outils (1), comprenant un dispositif (9, 24) selon l'une au moins des revendications 7 à 9.

Fig. 1

Fig. 2

31   31   31   30   31   31   31

Leistungsbedarf

m=-5
b= 8

Maschinentaktzeit

Fig. 3

49      45      48   46   40   42

Energiebedarf

t₁   Maschinentaktzeit

44                    41

Fig. 4

EP 3 314 341 B1

51    54    50  57    60

52   53   55   56   58   59   61   62

Fig. 5

101

102

103

104

105

106

107

108

109          110

Fig. 6

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112009004354 T5
- DE 102004030312 A1
- WO 2013143585 A1